Europäisches Patentamt

European Patent Office

Office européen des brevets

(19)

(11) Publication number: **0 020 711**
**B1**

(12) **EUROPEAN PATENT SPECIFICATION**

(45) Date of publication of patent specification: **16.05.84**

(51) Int. Cl.³: **F 02 D 19/00**

(21) Application number: **80900107.6**

(22) Date of filing: **03.12.79**

(86) International application number:
**PCT/US79/01035**

(87) International publication number:
**WO 80/01190 12.06.80 Gazette 80/13**

(54) **FUEL AND WATER EMULSIFICATION SUPPLY SYSTEM.**

(30) Priority: **11.12.78 US 968316**
**11.01.79 US 2626**

(43) Date of publication of application:
**07.01.81 Bulletin 81/01**

(45) Publication of the grant of the patent:
**16.05.84 Bulletin 84/20**

(84) Designated Contracting States:
**DE GB SE**

(56) References cited:
**DE-A-1 632 405**
**DE-A-2 757 419**
**GB-A- 409 333**
**US-A-1 611 429**
**US-A-2 319 858**
**US-A-2 671 311**
**US-A-2 810 561**
**US-A-3 921 599**
**US-A-3 953 002**

(73) Proprietor: **COTTELL, Eric C.**
**Private Road**
**Bayville, NY 11709 (US)**

(72) Inventor: **COTTELL, Eric C.**
**Private Road**
**Bayville, NY 11709 (US)**

(74) Representative: **Main, Peter Stephen et al**
**HYDE, HEIDE & O'DONNELL 146 Buckingham**
**Palace Road**
**London SW1W 9TR (GB)**

Courier Press, Leamington Spa, England.

## Description

Background of the Invention

This invention is concerned with a fuel supply system, particularly although not exclusively, since it will be apparent to those skilled in the art that the invention is applicable also in such environments as heating systems, the invention is concerned with a fuel supply system for a diesel engine. The invention is also applicable to fuel injected gasoline engines, to turbine engines and possibly to conventional gasoline engines provided with a carburetor.

It is known that the inclusion of water particles trapped inside fuel oils will promote combustion and that in a diesel engine, NOX and particulate emissions are reduced and power is increased. Attempts have been made to create an emulsion ahead of the injector pump by the utilization of an ultrasonic reactor to which a mixture of oil and water is delivered. However, particularly in small, high speed diesels the emulsions have proven to have a very short life and it is questionable whether the emulsion would remain stable even long enough to permit it to enter the combustion zone. In these attempts it has been recognised that it is necessary that the water phase of the emulsion be finely divided at the point of combustion if effective burning is to be achieved. This fact holds true in any environment in which a mixture of oil and water is to be burned.

In US—A—2 319 858 combustion engine control systems are described in which a mixture of fuel oil and a diluent (e.g. water) is formed by separately introducing the fuel oil and diluent into a mixing chamber from which the mixture passes to a fuel pump. It is emphasised that the mixing chamber must be located as close as possible to the pump in order to preclude any segregation of the normal engine fuel from the diluting agent while the mixture passes to the pump. It is likewise said to be essential that the connection between the injection pumps and the engine cylinders be made as short as practicable in order to eliminate as much as possible any lag in engine response, due to changes in throttle settings. In one of the systems disclosed, the fuel oil and diluent instead of being merely combined in a mixing chamber are mechanically mixed or emulsified by means of a turbine but it is emphasised that even when using such a mixer it must be as close as possible to the fuel pump.

US—A—1 611 429 describes a method of preparing liquid fuels for combustion wherein oil, water and air are brought to a first emulsified state by forcing them under pressure into a common main and from there into a mixing chamber containing fine screens; and the emulsion is then brought to a high pressure which is maintained until the emulsion is released by a spray or expansion valve. The build up of pressure is effected by a three-state pump unit, to a value in excess of 68.9 bar (1000 psi) and in some instances in excess of 206.8 bar (3000 psi) so that the liquid fuel globules become impregnated with air under the exceedingly high pressures. The flow of emulsion to and from the pump stages takes place via check valves which serve to prevent backpressure leakage of fuel. These valves also serve to mix or further emulsify the fuel because of the movement of the emulsion through the valve flow passages under high pressure.

It is also known to subject a fuel oil/water mixture to the action of an homogenizer downstream from a pump for supplying the fuel to a gas turbine (see e.g. DE—A—2 757 419).

The present invention provides a fuel supply system as defined in claim 1 hereof. The system is characterised by the provision of agitating means within conduits along which the fuel/water mixture flows to and from the pump for repeatedly dividing and remixing the fluid stream during its flow along said conduits.

When using a system according to the invention the continuous agitation of the fuel/water mixture upstream and downstream of the fuel pump, combined with the action of the pump, promotes the formation of an intimate fuel/water mixture for delivery to the nozzle. The nozzle itself has an emulsifying effect so that it serves to produce a final emulsion.

The means for causing agitation of the fuel/water mixture in each conduit may comprise a baffle-like element disposed in the conduit and so devised as to constantly divide the mixture of fuel and water and reunite it. Most desirably a swirling action of the fuel/water mixture is achieved and this can be obtained by using baffle means of helical form. Alternatively rifling may be formed in the conduits to impart a swirling motion or a helical spring type device could be disposed in the conduits.

The supple of water for mixing with the fuel may be established by the utilization of a float chamber and an appropriate orifice. Valve means may be provided for varying the mixture. The water may be carried in a separate tank or, particularly where the invention is applied to a motor vehicle, it may be condensed from the exhaust of the vehicle. In this latter instance the condenser can serve also as a scrubber to remove particulate emissions from the exhaust and of course, the recirculation of the products of combustion additionally tends to clean the exhaust.

The invention includes a method of promoting engine fuel combustion as claimed in claim 8 hereof. In this method, use is made of a fuel supply system according to the invention so that the fuel/water mixture is repeatedly divided and remixed both during flow to the fuel pump and during flow from the pump to the fuel delivery nozzle.

Description of the Figures of the Drawings

Figure 1 is a schematic illustration of a system according to the present invention;

Figures 2, 3 and 4 show details of the embodiment of figure 1;

Figure 5 shows a different form of fuel system according to the present invention; and

Figure 6 shows a further form of fuel system according to the invention.

Description of the Preferred Embodiments

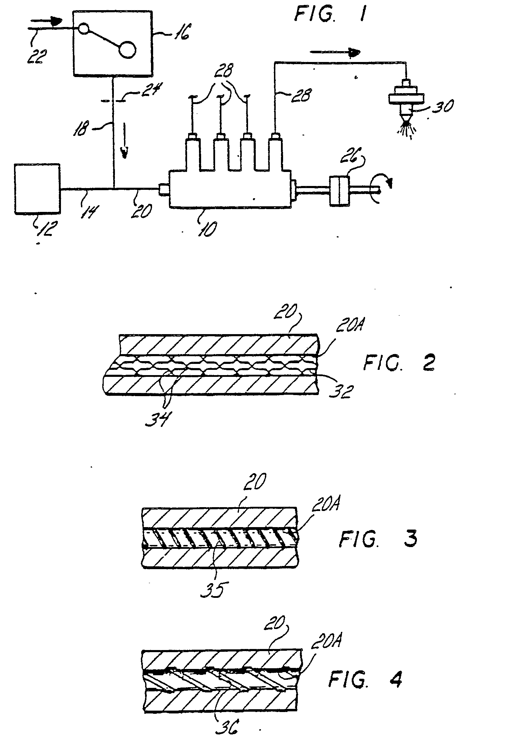

In Figure 1 there is schematically illustrated a fuel supply system according to the present invention utilized with a diesel engine. In that system an injection pump is indicated at 10 which receives oil from a fuel supply 12 along fuel supply conduit 14 and water from a supply 16 which is delivered along water supply conduit 18 to be united with the fuel. The mixture of fuel and water is conveyed to the pump 10 via the common conduit 20. The water supply 16 comprises a float chamber maintained filled along a water supply line 22, the float chamber being connected to the water supply conduit 18. Included in conduit 18 is an orifice or other restriction indicated at 24. Conduit 18 is most desirably of very narrow bore so that water is injected in the form of regularly spaced spheres into the fuel entering the common conduit 20.

As is conventional the injection pump 10 is driven from the diesel engine by a coupling 26. The injection pump delivers fuel/water mixture along conduits 28 to individual nozzles 20, only one of which is illustrated for the purposes of clarity, of the cylinders of the engine. Each of conduits 20 and 28 has means for causing agitation of the oil and water, passing therealong, such means causing repeated division and remixing of the mixture during its flow along the conduit. Typical means for causing this agitation are illustrated in figures 2, 3 and 4 and are described more fully hereinafter.

It is to be recognised that if a mixture of oil and water is delivered to a nozzle under pressure there will be an amulsification effect at the nozzle. By the inclusion of the agitation means described hereabove in the conduits through which the oil and water is passed to the nozzle repeated rapid division and re-mixing of the material flowing through the conduits is achieved so that there is delivered to the nozzle a finely divided, intimate mixture of oil and water.

Figure 2 illustrates one means according to the invention producing agitation within the conduits 20 and 28 of the supply system. The drawing shows part of the conduit 20. Within the bore 20A of this conduit there is disposed baffle means formed by a wire-like element 32 which at intervals along its length has propeller-like sections 34, the individual blades of those propeller-like sections being inclined to produce a swirling action of material passing thereover. Adjacent ones of the propellers are angularly offset from one another or may be of opposite hand so that as the mixture of oil and water flows through the conduit it is constantly deflected and reconstituted so that a fine intimate mixture of oil and water will result.

Figure 3 shows an alternative form of achieving a swirling action and in that embodiment, within bore 20A there is disposed baffle means formed by a helical spring 35. It will be recognised that as the mixture passes along the conduit it will be forced to swirl. This will produce an intimate mixture of the two components of the fuel.

An alternative embodiment is illustrated in figure 4 in which the surface defining bore 20A provides baffle means formed by rifling 36 which has an effect similar to that of the spring 35 in the embodiment of figure 3.

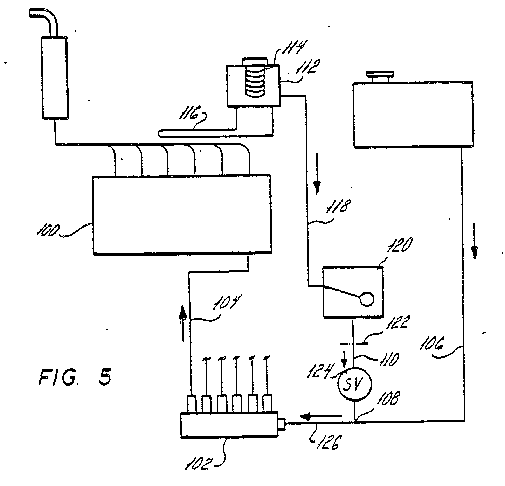

An alternative arrangement is illustrated in figure 5. In that embodiment an engine 100 is supplied with a fuel/water mixture by an injection pump 102 along fuel supply conduit 104. Oil is delivered from an oil supply along conduits 106 and 126. Water is delivered along conduit 110 to a T junction 108 between those conduits. The water is delivered from a reservoir 112 which may include an immersion heating coil 114 or which may have a heat exchanging relationship with the exhaust manifold of engine 100 as indicated schematically at 116. By heating the water, freezing problems are avoided.

From reservoir 112 a conduit 118 leads to a float chamber 120. The water supply conduit 110 leads from that float chamber and within that conduit there is provided an orifice 122 and a solenoid controlled valve 124. From the T junction 108 a mixture of oil and water is delivered along the conduit 126 to injection pump 102. This conduit 126 and conduit 104 include means for causing continuous agitation of the oil and water flowing therealong, those means being effective for causing a finely divided intimate mixture of oil and water to be delivered to the injection nozzles of the engine 100.

In the systems represented in Figs. 1 and 5, the relatively even distribution of water in oil produced by injecting the water in a controlled fashion into the fuel delivered along conduits 14 and 20, or 106 and 126 as the case may be, and the agitation means in the fuel/water conduits as above described, and also the turbulent conditions in the pump itself, combine to cause an intimate, finely divided mixture to be supplied to the nozzle or nozzles, which permits the nozzle(s) to effect the final emulsification thus eliminating the problem of separation of the emulsion before reaching the combustion zone.

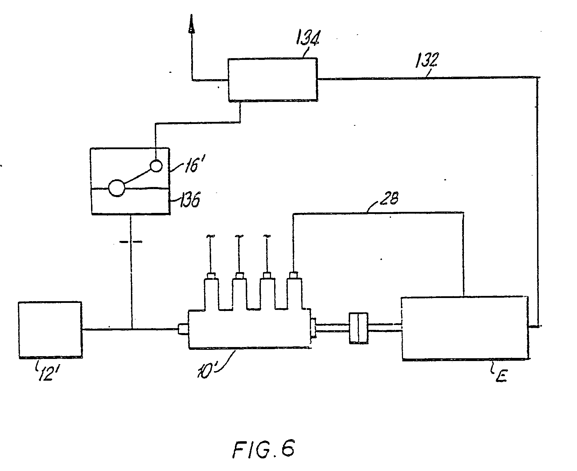

The embodiment of the invention illustrated in figure 6 largely resembles that in figure 1, having an injection pump 10', a fuel tank 12' and a water reservoir 16'. Fuel comprising a mixture of oil and water is delivered to injection nozzles of engine E along lines 28 and the products of combustion leave the engine to exhaust system 132. The exhaust system includes a condenser 134 which may take any convenient form effective to condense a sufficient quantity of water from the exhaust to provide a supply for use in the fuel system. From the condenser water is delivered to float chamber 136 to be used in the fuel supply. Such an arrangement has certain very distinct advantages. As well as eliminating the need to carry a water supply tank, the condenser tends to remove dangerous particulate emissions from the exhaust of the engine by acting as a scrubber and, of course, the recirculation of the condensed portions of the exhaust to the engine also improves the emissions level. To improve the scrubbing effect of the condenser it is possible to use a spray type unit, the water of the spray being derived from the exhaust.

It will be readily appreciated that the invention here described is subject to various modifications not deviating from its scope. Additionally, while the invention has been described with particular reference to its application in diesel engines it will readily be appreciated that it is equally applicable to any system in which oil or other liquid fuel and water are to be burned as, for example, in household oil burning systems, gasoline engines and turbine engines.

## Claims

1. A fuel supply system comprising a pump (10), means (12, 14 and 16, 18) for separately delivering fuel and water to a common conduit (20) which conducts a fuel/water mixture to the pump, and a conduit (28) for conducting fuel/water mixture from the pump to a fuel delivery nozzle (30) having an emulsifying effect on the mixture, characterised in that within both said conduits (20 and 28) there is agitating means (32, 35, 36) which extends along said conduits for repeatedly dividing and remixing the fluid stream during its flow along said conduits, whereby an intimate mixture of oil and water is delivered to said nozzle.

2. A system according to claim 1, characterised in that said agitating means (32, 35, 36) is static.

3. A system according to claim 1 or 2, characterised in that said agitating means (32, 35, 36) is effective for producing a swirling motion of the fuel/water mixture during flow along the conduits (20 and 28).

4. A system according to claim 3, characterised in that there is conduit insert means (32) having propeller-like sections (34) for producing said swirling motion.

5. A system according to claim 3, characterised in that there is helical spring means (35) for producing said swirling motion.

6. A system according to claim 3, characterised in that said agitating means comprises conduit bore rifling (36).

7. A system according to any preceding claim, characterised in that means (134) are provided for deriving said water from the fuel combustion products.

8. A method of promoting combustion of a fuel in an engine (E) into which said fuel is injected by atomising means (30), characterised in that use is made of a fuel supply system according to any preceding claim so that during flow along each of two conduits (20, 28) respectively leading to a fuel pump (10) and from such pump to said atomising means (30), the fuel/water mixture is repeatedly divided and remixed by the agitating means (32, 35, 36) in such conduit, and said conduit (28) located between the pump (10) and said atomising means (30) delivers an intimate mixture of oil and water to such atomising means (30), which atomising means subjects said mixture to a final emulsifying action.

## Patentansprüche

1. Brennstoffzufuhrsystem, bestehend aus einer Pumpe (10), Mitteln (12, 14 und 16, 18) zur getrennten Förderung von Brennstoff und Wasser in eine gemeinsame Leitung (20), die ein Brennstoff/Wassergemisch zur Pumpe führt, und einer Leitung (28) zur Führung des Brennstoff/Wassergemischs von der Pumpe zu einer Brennstofförderdüse (30) mit einer emulgierenden Wirkung auf das Gemisch, dadurch gekennzeichnet, dass sich innerhalb der besagten beiden Leitungen (20 und 28) Aufrührmittel (32, 35, 36) befinden, die sich entlang den besagten Leitungen zur wiederholten Aufteilung und Wiedervermischung des Flüssigkeitsstroms während dessen Strömung entlang diesen Leitungen erstrecken, wodurch ein inniges Gemisch aus Oel und Wasser an besagte Düse gefördert wird.

2. System nach Anspruch 1, dadurch gekennzeichnet, dass besagte Aufrührmittel (32, 35, 36) statisch sind.

3. System nach Anspruch 1 oder 2, dadurch gekennzeichnet, dass besagte Aufrührmittel (32, 35, 36) zur Erzeugung einer Drallbewegung des Brennstoff/Wassergemischs während der Strömung entlang den Leitungen (20 und 28) wirksam sind.

4. System nach Anspruch 3, dadurch gekennzeichnet, dass Leitungseinbauten (32) mit propellerartigen Abschnitten (34) zur Erzeugung der besagten Drallbewegung vorhanden sind.

5. System nach Anspruch 3, dadurch gekennzeichnet, dass Schraubenfedermittel (35) zur Erzeugung der besagten Drallbewegung vorhanden sind.

6. System nach Anspruch 3, dadurch gekennzeichnet, dass besagte Aufrührmittel aus spiralförmigen Riefen (36) in der Leitung bestehen.

7. System nach einem der vorhergehenden Ansprüche, dadurch gekennzeichnet, dass Mittel (134) zur Ableitung des besagten Wassers aus den Verbrennungsprodukten des Brennstoffs vorgesehen sind.

8. Verfahren zur Förderung der Verbrennung eines Brennstoffs in einem Motor (E), in den der besagte Brennstoff durch Zerstäubungsvorrichtungen (30) eingespritzt wird, dadurch gekennzeichnet, dass ein Brennstoffzufuhrsystem nach einem der vorhergehenden Ansprüche eingesetzt wird, so dass bei der Strömung entlang den beiden Leitungen (20, 28), die zu einer Brennstoffpumpe (10) bzw. von dieser zu den besagten Zerstäubungsmitteln (30) führen, das Brennstoff/Wassergemisch wiederholt aufgeteilt und durch die Aufrührmittel (32, 35, 36) in einer solchen Leitung wieder vermischt wird, und die besagte, zwischen der Pumpe (10) und jenen Zerstäubungsmitteln (30) befindliche Leitung (28) ein inniges Gemisch aus Oel und Wasser an solche Zerstäubungsmittel (30) fördert, welche dieses Gemisch einer endgültigen Emulgierwirkung aussetzen.

## Revendications

1. Système d'alimentation de carburant comprenant une pompe (10), un moyen (12, 14 et 16, 18) en vue de distribuer séparément le carburant et l'eau vers un conduit commun (20) véhiculant un mélange de carburant/eau vers la pompe, ainsi qu'un conduit (28) véhiculant le mélange carburant/eau de la pompe vers une buse de distribution de carburant (30) exerçant un effect émulsionnant sur le mélange, caractérisé en ce que, dans les deux conduits (20 et 28), est prévu un moyen d'agitation (32, 35, 36) s'étendant le long de ces conduits afin de diviser à plusieurs reprises et de remélanger le courant fluide au cours de son écoulement le long de ces conduits de façon à distribuer un mélange intime d'huile et d'eau à cette buse.

2. Système suivant la revendication 1, caractérisé en ce que le moyen d'agitation (32, 35, 36) est statique.

3. Système suivant la revendication 1 ou 2, caractérisé en ce que le moyen d'agitation (32, 35, 36) produit efficacement un mouvement tourbillonnaire du mélange de carburant/eau au cours de son écoulement le long des conduits (20 et 28).

4. Système suivant la revendication 3, caractérisé en ce qu'on prévoit, dans les conduits, une pièce rapportée (32) ayant des sections analogues à une hélice (34) en vue de produire le mouvement tourbillonnaire.

5. Système suivant la revendication 3, caractérisé en ce qu'on prévoit un ressort hélicoïdal (35) en vue de produire le mouvement tourbillonnaire.

6. Système suivant la revendication 3, caractérisé en ce que le moyen d'agitation est constitué de rayures (36) formées dans l'alésage du conduit.

7. Système suivant l'une quelconque des revendications précédentes, caractérisé en ce qu'on prévoit un moyen (134) en vue de prélever l'eau des produits de la combustion du carburant.

8. Procédé en vue d'activer la combustion d'un carburant dans un moteur (E) dans lequel ce carburant est injecté par un moyen d'atomisation (30), caractérisé en ce qu'on utilise un système d'alimentation de carburant suivant l'une quelconque des revendications précédentes de telle sorte qu'au cours de l'écoulement le long de chacun des deux conduits (20, 28) allant respectivement à une pompe de carburant (10) et de cette pompe à ce moyen d'atomisation (30), le mélange de carburant/eau soit divisé à plusieurs reprises et remélangé par le moyen d'agitation (32, 35, 36) prévu dans ce conduit, le conduit (28) situé entre la pompe (10) et le moyen d'atomisation (30) distribuant un mélange intime d'huile et d'eau à ce moyen d'atomisation (30), ce dernier soumettant ce mélange à un effect d'émulsionnement final.

FIG. 1

FIG. 2

FIG. 3

FIG. 4

FIG. 5

FIG.6